Europäisches Patentamt

European Patent Office

Office européen des brevets

(19)

(11) Numéro de publication: **0 094 354**
**B1**

(12) **FASCICULE DE BREVET EUROPEEN**

(45) Date de publication du fascicule du brevet: **18.05.88**

(21) Numéro de dépôt: **83810200.2**

(22) Date de dépôt: **11.05.83**

(51) Int. Cl.⁴: **C 04 B 35/64**

(54) Procédé de mise en forme de pièces céramiques polycristallines denses.

| | |
|---|---|
| (30) Priorité: **11.05.82 CH 2935/82** | (73) Titulaire: **Mocellin, Alain**<br>**12 Chemin du Coteau**<br>**CH-1009 Pully (CH)** |
| (43) Date de publication de la demande:<br>**16.11.83 Bulletin 83/46** | (73) Titulaire: **Carry, Claude**<br>**7, Bois de la Fontaine**<br>**CH-1007 Lausanne (CH)** |
| (45) Mention de la délivrance du brevet:<br>**18.05.88 Bulletin 88/20** | (72) Inventeur: **Mocellin, Alain**<br>**12 Chemin du Coteau**<br>**CH-1009 Pully (CH)**<br>Inventeur: **Carry, Claude**<br>**7, Bois de la Fontaine**<br>**CH-1007 Lausanne (CH)** |
| (84) Etats contractants désignés:<br>**AT BE CH DE FR GB IT LI LU NL SE** | |
| (56) Documents cités:<br>**GB-A-1 341 233**<br>**US-A-3 776 744**<br><br>**JOURNAL OF THE AMERICAN CERAMIC SOCIETY, vol. 58, nos. 1/2, 1975, pages 31-34, Columbus, Ohio, US; W.H. RHODES et al.: "Hot-working of aluminum oxide: II, optical properties"**<br>**JOURNAL OF THE AMERICAN CERAMIC SOCIETY, vol. 63, nos. 7/8, 1980, pages 368-375, Columbus, Ohio, US; A.G. EVANS et al.: "Suppression of cavity formation in ceramics: prospects for superplasticity"** | (74) Mandataire: **Vuille, Roman et al**<br>**c/o KIRKER & Cie S.A. 14, rue du Mont-Blanc**<br>**Case Postale 872**<br>**CH-1211 Genève 1 (CH)**<br><br>(56) Documents cités:<br>**Le dossier contient des informations techniques présentées postérieurement au dépôt de la demande et ne figurant pas dans le présent fascicule.** |

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

Les procédés dits de formage à chaud de pièces nécessitent des taux de déformation plastique élevés du matériau. Les bases et les conditions du formage superplastique sont assez bien connues pour un certain nombre de métaux et alliages (Eléments de Métallurgie Physique, Tome 5, p. 1605—1629, 1979; édité par le Commissariat à l'Energie Atomique et distribué par La Documentation Française). On admet que l'origine du comportement superplastique est un mécanisme de déformation par glissement aux joints de grains: ceci impose une structure polycristalline très fine des métaux et alliages superplastiques.

Pour une transposition aux matériaux céramiques de ces procédés de formage en conditions superplastiques, les phénomènes de cavitation (Suppression of Cavity Formation in Ceramics: Prospects for Superplasticity, A. G. Evans, L. R. Rice et J. P. Hirth, Journal of the American Ceramic Society, 63, p. 368—375, 1980) sont considérés actuellement comme l'obstalce principal. En métallurgie, des déformations plastiques par dislocations localisées au voisinage des limites de grains semblent rendre le problème moins crucial. Mais de tels mécanismes faisant intervenir des dislocations, sont a priori moins probables dans les matériaux céramiques en raison du manque de ductilité de ces matériaux.

Ces procédés de formage "superplastique" nécessitent une taille initiale de cristaux suffisamment petite (de l'ordre du micromètre). On considère généralement qu'elle reste à peu près constante, et/ou qu'une variation éventuelle ne joue pas de rôle significatif au cours de l'opération de déformation proprement dite. Il est cependant reconnu que cette taille de grains n'est pas rigoureusement constante mais dans les matériaux métalliques connus on observe qu'elle varie peu (Superplastic Deformation of Ti-6 Al-4 V Alloy, A. Arieli et A. Rosen, Metallurgical Transactions A, 8A, p. 1591—1596, 1977).

Les auteurs de la présente invention se sont proposé de trouver un procédé de mise en forme de pièces céramiques denses, en partant de l'idée que, contrairement à ce qui est admis, la cinétique de croissance de la taille des grains revêt une importance fondamentale pour les opérations de formage des céramiques polycristallines denses. Ils se sont basés pour cela sur les considérations suivantes.

D'une part en l'absence de processus faisant intervenir la création et le mouvement de dislocations, une certaine croissance des grains est nécessaire si on veut empêcher la formation de cavités. Les seuls mécanismes d'accommodation possibles nécessitent de la diffusion de matière et ce sont des processus de diffusion qui rendent compte de la crossance granulaire. La cavitation ne pourra donc être évitée qu'à des niveaux de température assez élevés favorisant la diffusion.

D'autre part, pendant la durée du formage, la croissance de grain ne doit pas être trop rapide, car une augmentation rapide de la taille de grains diminuerait très fortement les vitesses de déformation practicables sans produire de cavitation. En formage superplastique, il existe une relation inverse entre taille de grains et vitesse de déformation. En outre, pour un certain nombre d'applications, les niveaux de propriétés sur pièces requis (par exemple résistance à la rupture) ne peuvent être atteints que si la taille des grains reste faible. Les niveaux de température pendant l'opération de formage ne pourront donc être trop élevés.

On part du postulat qu'une certaine croissance de grains est nécessaire pour le formage, parce qu'une opération de mise en forme sans création (ou avec un taux réduit) de microcavités ne peut se faire qu'avec l'assistance d'un mécanisme de croissance de grains.

De plus, on admet qu'il y a nécessité de pratiquer le formage dans une gamme de vitesses de déformation locales

$$\dot{\varepsilon} = \frac{d\varepsilon}{dt}$$

(avec $\varepsilon = \mathrm{Ln}\, l/l_o$ avec $l_o$ dimension linéaire initiale et $l$ dimension linéaire après déformation) corrélée au paramètre de croissance de grains

$$\frac{\dot{D}}{D}$$

($D$ taille moyenne de grains et

$$\dot{D} = \frac{dD}{dt}$$

vitesse de croissance de grains). Il a été trouvé expérimentalement que les limites de la gamme des vitesses de déformation locales praticables dans la pièce sont données par l'inégalité suivante:

$$|\dot{\varepsilon}| \leqslant 5(1 + \frac{\alpha}{5})\frac{\dot{D}}{D} \qquad (1)$$

ou de préférence:

$$|\dot{\varepsilon}| \leqslant 2(1 + \frac{\alpha}{5})\frac{\dot{D}}{D}$$

avec $\alpha$ taux de cavitation en fin d'opération, toléré par l'opérateur ($\alpha$ est exprimé en % volumique et, chose importante, peut être nul).

De manière concrète, étant donné une ébauche céramique dense (par exemple 99% de la densité théorique) et à grains fins ($D_{initial} < 10\ \mu m$) l'opérateur fait les opérations suivantes:

1. déterminer à partir de la forme finale visée et de la forme de l'ébauche, le taux de déformation local maximum $\varepsilon_{max}$ à faire subir au matériau;

2. fixer la taille maximum, $D_{max}$, de grains, tolérable par l'utilisateur dans la pièce en service, soit $D_{max} \leqslant 20$ μm.

3. déterminer, par des mesures de vitesses de croissance de grains une gamme de températures de formage telle que

$$\int_o^t \dot{D}(t,T)dt \leqslant 2D_{max} \qquad (2)$$

avec

$$\int_o^t \dot{\varepsilon}(t)dt = \varepsilon max \qquad (3)$$

$\dot{D}$ dépend généralement à la fois de la température T est du temps t; une relation entre ces deux paramètres pouvant être imposée par l'opérateur.

A cette température T l'inégalité (1) impose une valeur absolue maximum de la vitesse de déformation. Associée à la relation (3) cette même inégalité (1) impose un temps t minimum à l'opération de formage qui doit être comptable avec l'inégalité (2).

L'invention a par conséquent pour objet un procédé de mise en forme de pièces céramiques polycristallines denses, caractérisé en ce qu'on choisit un matériau céramique ayant une taille initiale moyenne de grains ($D_o$) non supérieure à 10 μm, on détermine, par des mesures de vitesse de croissance de grains du matériau avant formage, une gamme de températures de formage telle que la relation

$$\int_o^t \dot{D}dt \leqslant 2 \ Dmax,$$

avec Dmax=taille maximum de grains tolérable en service dans la pièce formée, et la relation

$$\int_o^t \dot{\varepsilon}dt = \varepsilon max,$$

avec εmax=déformation locale maximum nécessaire, soient satisfaites, on porte ce matériau dans une gamme de températures convenant pour produire une augmentation de la taille moyenne des grains pendant la durée de l'operation jusqu'à une taille finale (D) au plus égale à 20 μm et en ce qu'on réalise simultanément, pendant la croissance des grains, l'opération de formage avec une vitesse de déformation locale

$$\dot{\varepsilon} = \frac{d\varepsilon}{dt}$$

(avec $\varepsilon = Ln \ l/l_o$, $l_o$ étant la dimension linéaire initiale de grains et l leur dimension linéaire après formation), corrélée en permanence au paramètre de croissance des grains

$$\frac{\dot{D}}{D}$$

(D étant la taille moyenne des grains et

$$\dot{D} = \frac{dD}{dt}$$

la vitesse de croissance instantanée) de façon à satisfaire à la condition

$$|\dot{\varepsilon}| \leqslant 5(1 + \frac{\alpha}{5}) \ \frac{\dot{D}}{D},$$

avec α=taux de cavitation maximum toléré dans le matériau en fin de formage et exprimé en % volumique.

Les limites que l'on a indiquées pour la grosseur moyenne des grains, soit $D_{Initial} < 10$ μm et $D_{max} \leqslant 20$ μm, pourront éventuellement être abaissées, dans certains cas, respectivement à 5 μm et 10 μm.

On peut en outre choisir la température de formage de façon telle que

$$\int_o^t \dot{D}dt \leqslant 1,5 \ Dmax$$

Il est évident que l'opération, pour matériau donné, devra se faire au delà d'une certaine température pour avoir une certaine croissance ($\dot{D} > 0$). Toutefois l'ensemble des conditions (1) (2) et (3) définit les conditions théoriquement nécessaires pour que l'opération projetée soit possible, quels que soient le matériau et l'ébauche de départ.

Toutefois, il est clair qu'en pratique, l'opérateur devra tenir compte de certains impératifs supplémentaires (par exemple le prix de revient) et cela le conduira, le cas échéant, à considérer si les températures et durées de formage déduites des considérations théoriques indiquées, sont compatibles avec ces impératifs pratiques.

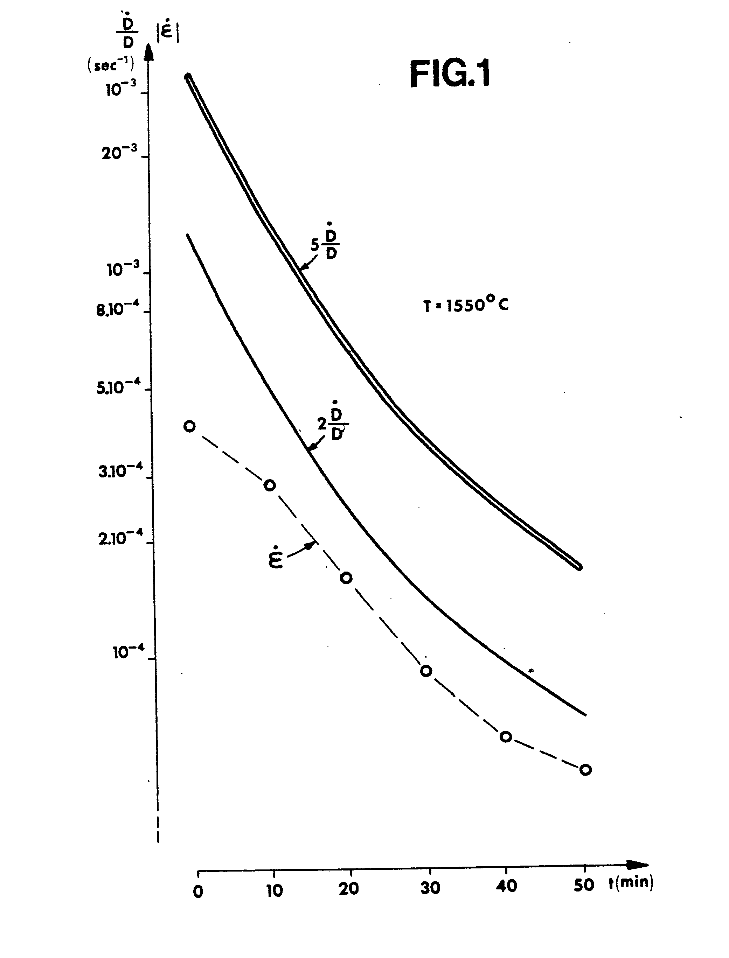

On va décrire maintenant, à titre d'exemples, des mises en oeuvre du procédé de l'invention. Les figures 1, 2, 3 et 5 sont des diagrammes relatifs à de telles mises en oeuvre.

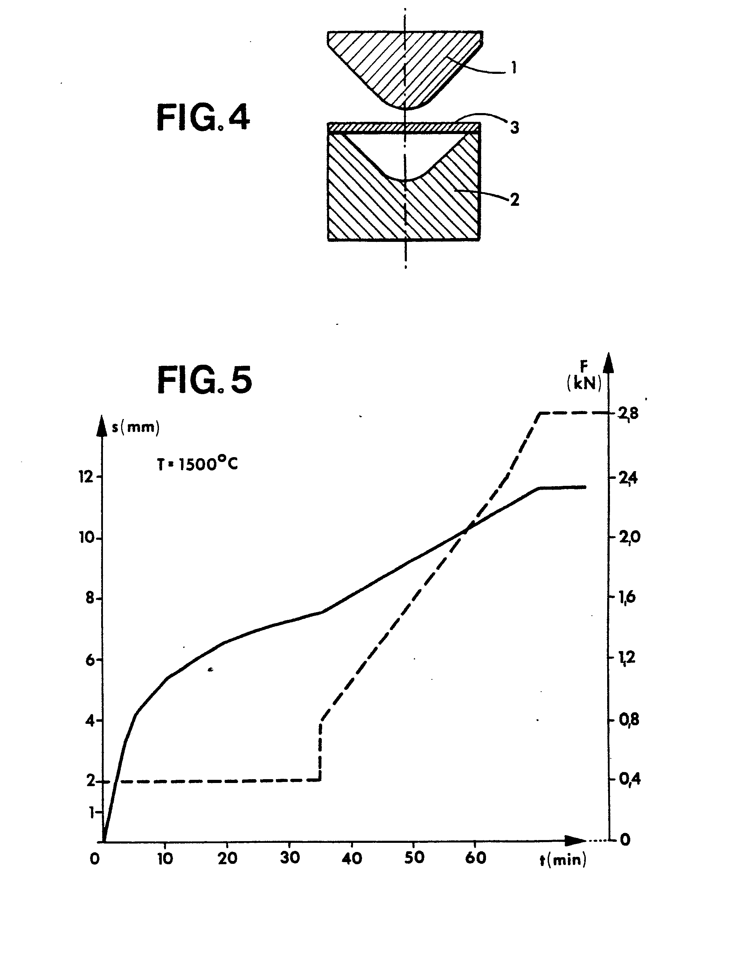

La figure 4 est une vue schématique, en coupé d'un dispositif servant à former des demi-coquilles à partir d'une plaquette en matière céramique, comme il est expliqué en référence à ces diagrammes.

La définition précisé des tailles de grains, des vitesses de croissance et du paramètre de croissance

$$\frac{\dot{D}}{D}$$

se fera à partir d'observations expérimentales simples:

1. Mesure de la taille de grains initiale $D_o$ du matériau à former. On utilisera la méthode dite des intercepts sur plusieurs micrographies de coupes planes du polycristal. $D_o$ est obtenu en divisant la longueur totale L de lignes tests tracées aléatoirement sur les micrographies par, d'une part, le grandissement de la photo et, d'autre part, par le nombre total d'intersections I de ces lignes avec des joints de grains. On prendra le nombre de photos et de lignes tests suivant les critères classiques de cette méthode pour avoir un nombre I supérieur à 500.

2. On fera sur des échantillons du matériau des traitements thermiques de différentes durées (p.ex. 10, 20, 40, 80, 160 min.) à différentes températures. Par la même méthode qu'en 1, on mesurera la taille de grains après ces différents traitements thermiques. On en déduira pour chaque température les courbes $D=f(t)$, $\dot{D}=f(t)$ et

$$\frac{\dot{D}}{D}=f(t).$$

On considère ici $D_o=10\ \mu m$ comme la limite supérieure du domaine de taille initiale de grains pour que le mécanisme de déformation par glissement aux joints soit prédominant. Pendant une opération de formage type, l'augmentation de la taille de grain peut être avantageusement de l'ordre de 50 à 100%, ce qui signifie l'acceptation et la recherche d'une croissance granulaire pendant l'opération de formage.

Les essais et expériences à l'origine de cette invention ont porté sur de l'alumine $(Al_2O_3-\alpha)$ à grains fins. Des essais sur du carbure de silicium ont été effectués pour confirmer la généralité du procédé.

On va décrire maintenant plus en détail des mises en oeuvre du procédé, appliquées au cas de l'alumine et du carbure de silicium.

I. Alumine $(Al_2O_3)$

Les essais ont été effectués sur un matériau élaboré par frittage sous charge d'une poudre ultrafine d'alumine dopée à la magnésie et pouvant contenir également une fraction de $Cr_2O_3$. Les frittages ont eu lieu dans une matrice de graphite à des températures comprises entre 1400°C et 1600°C sous des contraintes de 40 MPa. Les densités obtenues étaient supérieures à 3,95 gr/cm³ et les tailles de grains initiales $D_o$ étaient comprises entre 0,9 et 2,3 µm. Deux sortes d'expériences ont été réalisées:
—des essais de déformation en compression
—des essais de formage de pièces: demi-coquilles à partir de plaquettes.

1. Essais de déformation en compression

Pour un matériau fritté sous charge à 1500°C, la figure 1 représente, en fonction du temps t (en min) les valeurs des paramètres de croissance

$$2\frac{\dot{D}}{D}\text{ et }5\frac{\dot{D}}{D}$$

et de $\dot{\varepsilon}$ (tous deux en sec⁻¹), pour une température de 1550°C: Ces courbes ont été tracées à partir de mesures de tailles de grains moyennes d'échantillons de matériau ayant subi des traitements thermiques à 1550°, de différentes durées t.

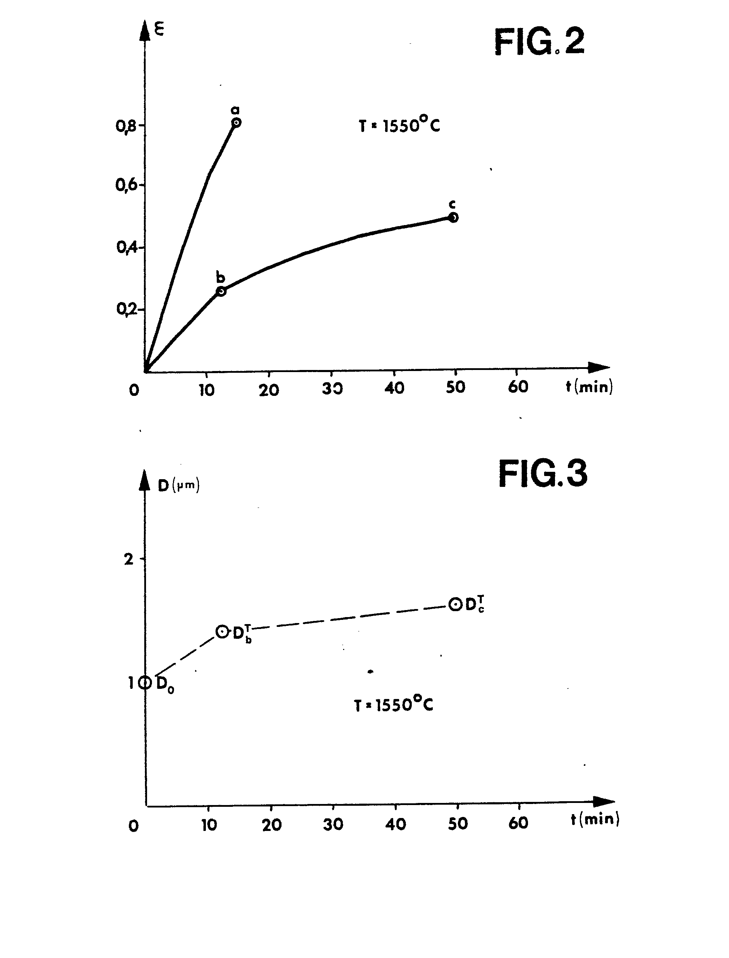

La figure 2 est un diagramme sur lequel on a porté $\varepsilon$ (tel que défini plus haut) en ordonnées, et en abscisses le temps t de l'opération de déformation, en minutes. Cette figure montre des courbes de réduction de hauteur (ou écrasement) à 1550°C correspondant aux essais suivants:

a: échantillon fritté sous charge à 1500°C et déformé sous une contrainte de 125 MPa (repère E53L60): un taux de cavité de 5% en volume a été mesuré après déformation.

b et c: échantillons frittés sous charge à 1500°C et déformés sous une contrainte de 45 MPa pendant respectivement 12,5 et 50 minutes (repères E48L55 et E37L38): aucune formation de cavité n'a été détectée.

Les différentes vitesses de déformation mesurées pendant les essais b et c ont été reportées sur la figure 1. Cette figure montre alors clairement que l'inégalité (1) a été vérifiée pendant toute la durée du traitement de déformation.

La figure 3 est un diagramme sur lequel on a porté en ordonnées la taille D (en µm) des grains et en abscisses le temps t de l'opération, en minutes. Ce diagramme montre les valeurs mesurées des tailles de grains après les essais b, c, soit $D_o$ après frittage et $D_i^T$ après des traitements thermiques à T=1550°C de mêmes durées que les essais de déformation. L'indice O se réfère à l'état initial et l'indice i au matériau de l'essai considéré.

Un certain nombre d'autres essais à 1550°C et 1600°C ont été effectués et on mis en évidence une évolution identique des matériaux et des microstructures.

2. Essais de formage

La figure 4 représente schématiquement en 1 un piston de formage et en 2 un outil de formage ayant une forme complémentaire de celle de l'outil 1. On a représenté en 3 une plaque d'alumine à laquelle il s'agit de donner la forme d'une demi-coquille.

La figure 5 est un diagramme illustrant l'opération de formage de la plaquette 3 au moyen du dispositif 1, 2. Sur ce diagramme on a porté en ordonnées, d'une part, le déplacement s du piston en mm (à partir d'une origine correspondant à l'arrivée en contact du piston 1 avec la plaquette 3 reposant sur l'outil 2) et, d'autre part, la force F (en kN) appliquée par le piston 1 au matériau de la plaquette 3. En abscisses on a porté le temps t d'opération, en minutes. La courbe en trait plein représente le déplacement s du piston en fonction du temps t, tandis que la ligne en trait pointillé représente la force appliquée F, en fonction du temps t.

Des demi-coquilles ont été formées ainsi à 1500°C à partir de plaquettes de 50 mm de diamètre et de 2,6 mm d'épaisseur; ces plaquettes avaient été frittées à 1500°C sous une contrainte de 40 MPa. La charge appliquée sur le piston pendant l'opération de formage a varié de 550 à 2800 Newtons.

## II. Carbure de silicium (SiC)

Quelques essais du même type ont été réalisés sur deux matériaux d'origine commerciale (Elektroschmelz Werk/Kempten RFA); ils ont démontré le caractère général de ce processus de déformation assisté par la croissance de grains: deux tailles de grains initiales $D_o$ et 2,4 et 1,7 µm ont été utilisées pour des essais à 1900°C pendant une heure environ.

## Revendications

1. Procédé de mise en forme de pièces céramiques polycristallines denses, caractérisé en ce qu'on choisit un matériau céramique ayant une taille initiale moyenne de grains ($D_o$) non supérieure à 10 µm, on détermine, par des mesures de vitesse de croissance de grains du matériau avant formage, une gamme de températures de formage telle que la relation

$$\int_o^t \dot{D}dt \leqslant 2 \, Dmax,$$

avec Dmax =taille maximum de grains tolérable en service dans la pièce formée, et la relation

$$\int_o^t \varepsilon dt = \varepsilon max,$$

avec $\varepsilon max$=déformation locale maximum nécessaire, soient satisfaites, on porte ce matériau dans une gamme de températures convenant pour produire une augmentation de la taille moyenne des grains pendant la durée de l'opération jusqu'à une taille finale (D) au plus égale à 20 µm et en ce qu'on réalise simultanément, pendant la croissance des grains, l'opération de formage avec une vitesse de déformation locale

$$\dot{\varepsilon} = \frac{d\varepsilon}{dt}$$

(avec $\varepsilon$=Ln $l/l_o$, $l_o$ étant la dimension linéaire initiale de grains et l leur dimension linéaire après formation), corrélée en permanance au paramètre de croissance des grains

$$\frac{\dot{D}}{D}$$

(D étant la taille moyenne des grains et

$$\dot{D} = \frac{dD}{dt}$$

la vitesse de croissance instantanée) de façon à satisfaire à la condition

$$|\dot{\varepsilon}| \leqslant 5(1 + (1 + \frac{\alpha}{5}) \frac{\dot{D}}{D}$$

avec $\alpha$=taux de cavitation maximum toléré dans le matériau en fin de formage et exprimé en % volumique.

2. Procédé selon la revendication 1, caractérisé en ce qu'on choisit la taille initiale moyenne des grains ($D_o$) non supérieure à 5 µm, et en ce qu'on produit une augmentation de la taille moyenne des grains jusqu'à une taille finale (D) au plus égale à 10 µm.

3. Procédé selon la revendication 1, caractérisé en ce qu'on détermine une température de formage telle que

$$\int_o^t \dot{D}dt \leqslant 1,5 \, Dmax.$$

4. Procédé selon la revendication 1, caractérisé par l'inégalité

$$|\dot{\varepsilon}| \leqslant 2(1 + \frac{\alpha}{5}) \frac{\dot{D}}{D}.$$

## Patentansprüche

1. Verfahren zum Formen von Teilen aus polykristalliner, dichter Keramik, dadurch gekennzeichnet, dass man ein keramisches Material mit einer mittleren anfänglichen Korngrösse ($D_o$) von nicht mehr als 10 µm auswählt, dass man vor dem Formen, mit Messungen der Wachstumsgeschwindigkeit des Korns des Materials einen Temperaturbereich für das Formen bestimmt, in welchem die beiden Beziehungen

$$\int_o^t \dot{D}dt \leqq 2 \, D_{max,}$$

wobei $D_{max}$ die maximal für den zu formenden Teil zulässige Korngrösse und

$$\int_o^t \varepsilon dt = \varepsilon_{max,}$$

wobei $\varepsilon_{max}$ die maximale örtliche Deformation bedeutet, erfüllt sind, dass man dieses Material in einen Temperaturbereich bringt, in dem die mittlere Korngrösse zur Endgrösse von höchstens 20 µm wächst (D), und dass gleichzeitig, während des Wachsens des Korns, der Formvorgang mit der örtlichen Geschwindigkeit

$$\dot{\varepsilon} = \frac{d\varepsilon}{dt}$$

(mit $\varepsilon = L_n l/l_o$, wobei $l_o$ die ursprüngliche, lineare Korngrösse und l die lineare Grösse nach dem Formen bedeuten), laufend derart mit dem Wachstumsparameter $\dot{D}/D$ (wobei D die mittlere Korngrösse und $\dot{D}=dD/dt$ die mittlere Wachtumsgeschwindigkeit bedeuten) korreliert wird, dass die Bedingung

$$|\dot{\varepsilon}| \leqq 5(1+\alpha/5)\dot{D}/D$$

erfüllt ist, wobei $\alpha$=die maximal zulässige, auf das Volumen bezogene, prozentuale Kavitation des Materials nach dem Formen ist.

2. Verfahren nach Anspruch 1, dadurch gekennzeichnet, dass man eine mittlere anfänglichen Korngrösse ($D_o$) von nicht mehr als 5 µm wählt und dass man eine Erhöhung der mittleren Korngrösse am Ende (D) auf höchstens 10 µm erzeugt.

3. Verfahren nach Anspruch 1, dadurch gekennzeichnet, dass man eine Formtemperatur so bestimmt, dass

$$\int_o^t \dot{D}\ dt \leqq 1.5\ D_{max}\ \text{ist.}$$

4. Verfahren nach Anspruch 1, gekennzeichnet durch die Ungleichung

$$|\dot{\varepsilon}| \leqq 2(1+\alpha/5)\dot{D}/D.$$

## Claims

1. A process for the shaping of dense polycrystalline ceramic components, characterized in that a ceramic material is chosen which has a mean initial particle size ($D_o$) not exceeding 10 µm, a range of forming temperatures is determined by measuring the rate of growth of particles of the material prior to forming, the said temperature range being such that the relationship

$$\int_o^t \dot{D}dt \leqslant 2\ D_{max},$$

where $D_{max}$=maximum tolerable particle size in the shaped component when in service, and the relationship

$$\int_o^t \varepsilon dt = \varepsilon_{max},$$

where $\varepsilon_{max}$=maximum necessary local deformation, are satisfactory, and this material is heated within a temperature range suitable for producing an increase in the mean particle size, throughout the operation, up to a final size (D) equal to at most 20 µm, and in that the forming operation is carried out simultaneously, during the growth of the particles at a rate of local deformation

$$\dot{\varepsilon}=\frac{d\varepsilon}{dt}$$

(where $\varepsilon=Ln\ l/l_o$, $l_o$ being the initial linear dimension of the particles and l their linear dimension after formation), which is continuously correlated with the particle growth parameter

$$\frac{\dot{D}}{D}$$

(D being the mean particle size and

$$\dot{D}=\frac{dD}{dt}$$

being the instantaneous growth rate) so as to satisfy the condition

$$|\dot{\varepsilon}| \leqslant 5(1+\frac{\alpha}{5})\ \frac{\dot{D}}{D},$$

where $\alpha$=maximum tolerated cavitation factor in the material when forming is complete, expressed in % by volume.

2. The process according to Claim 1, characterized in that the mean initial particle size ($D_o$) is chosen so as not to exceed 5 µm, and in that an increase in the mean particle size is produced up to a final size (D) equal to at most 10 µm.

3. The process according to Claim 1, characterized in that the forming temperature is determined so that

$$\int_o^t \dot{D}dt \leqslant 1.5\ D_{max}.$$

4. The process according to Claim 1, characterized by the inequality:

$$|\dot{\varepsilon}| \leqslant 2(1+\frac{\alpha}{5})\ \frac{\dot{D}}{D}.$$

FIG.1

FIG.2

FIG.3

FIG. 4

FIG. 5

T = 1500°C